Europäisches Patentamt

European Patent Office

Office européen des brevets

(19)

(11) Veröffentlichungsnummer: **0 263 961 B1**

(12) **EUROPÄISCHE PATENTSCHRIFT**

(45) Veröffentlichungstag der Patentschrift: **04.03.92**

(51) Int. Cl.⁵: **H04M 15/10**, H04M 15/00

(21) Anmeldenummer: **87112898.9**

(22) Anmeldetag: **03.09.87**

(54) **Schaltungsanordnung zum Einspeisen von Zählimpulsen für die Gebührenzählung beim Teilnehmer.**

(30) Priorität: **12.09.86 DE 3631175**

(43) Veröffentlichungstag der Anmeldung:
**20.04.88 Patentblatt 88/16**

(45) Bekanntmachung des Hinweises auf die
Patenterteilung:
**04.03.92 Patentblatt 92/10**

(84) Benannte Vertragsstaaten:
**AT BE CH DE FR GB IT LI NL SE**

(56) Entgegenhaltungen:
**EP-A- 0 206 279        AU-B- 2 177 583
DE-A- 2 816 408        DE-A- 3 237 550
DE-A- 3 318 508        DE-A- 3 334 953**

(73) Patentinhaber: **SIEMENS AKTIENGESELL-
SCHAFT
Wittelsbacherplatz 2
W-8000 München 2(DE)**

(72) Erfinder: **Malek, Moni, M.A.
Bavariastrasse 3
W-8000 München 2(DE)**

# Beschreibung

Die Erfindung betrifft eine Schaltungsanordnung zum Einspeisen von Zählimpulsen für die Gebührenzählung beim Teilnehmer auf die an zu einer Baugruppe zusammengefaßten Teilnehmeranschluschaltungen angeschlossenen Teilnehmeranschlußleitungen eines digitalen Zeitmultiplex-Fernsprechvermittlungssystems, die durch leitungsindividuelle Testrelais mit einer gruppenindividuellen Testbusleitung zur Durchführung von Leitungsprüfungen verbindbar sind. Der Einsatz derartigen Testrelais ist z.B in der DE-A-28 16 408 beschrieben.

Für die Gebührenzählung beim Teilnehmer in digitalen Zeitmultiplex-Fernsprechvermittlungssystemen werden Gebührenimpulse mit einer außerhalb des Fernsprechbandes von 300 Hz bis 3400 Hz liegender Frequenz vorzugsweise 16 kHz an zentraler Stelle erzeugt und in den Teilnehmeranschlußschaltungen auf die Teilnehmeranschlußleitungen eingespeist. Diese Einspeisung erfolgt im Rhythmus eines von der jeweiligen Zeitzone der zu bewertenden Verbindung abhängigen Gebührentakts. In der Teilnehmerstation erfolgt dann eine entsprechende Zählung und Anzeige der Gebührenimpulse.

Für die Einspeisung der Gebührenimpulse wirken bisher leitungsindividuell aufwendige Schaltungen verwendet, zu denen zwei abgestimmte Filterschaltungen und zwei Koppeltransformatoren gehörten. Die Einspeisung der Gebührenimpulse auf die einzelnen Teilnehmeranschlußleitungen erfolgte unabhängig voneinander. (vgl. DE-A-33 34 953).

Die Aufgabe der Erfindung besteht nun darin, diesen Aufwand zu verringern.

Erfindungsgemäß gelingt dies dadurch, daß eine Schaltungsanordnung der im Oberbegriff angegebenen Art als leitungsindividuelle Bestandteile lediglich die Teilnehmeranschlußleitungen mit der zugehörigen Teilnehmeranschlußschaltung verbindende, im Fernsprech-Frequenzbereich durchlässige Tiefpaßschaltungen und als gruppenindividuellen Bestandteil eine Einspeiseschaltung aufweist, die an den Prüfbus angeschlossen ist und einen Koppeltransformator, an dessen Primärwicklung ein Zählimpulsgenerator angeschlossen ist, ferner einen im mit dem Prüfbus in Verbindung stehenden Sekundärkreis des Koppeltransformators liegenden und für die Zählfrequenz durchlässigen Bandpaß, sowie einen ebenfalls im Sekundärkreis des Koppeltransformators liegenden elektronischen Schalter zur Erzeugung des Zähltaktes aufweist, der sowohl beim Schließen als auch beim Öffnen allmählich in den anderen Schaltzustand übergeht und dadurch daß die der Teilnehmeranschlußleitung zugeordneten Testrelais zur Einspeisung der Gebührenimpulse herangezogen werden und dabei nacheinander betätigt werden, und daß ein Schließen des genannten elektronischen Schalters jeweils nach dem Anziehen eines Testrelais und ein Öffnen jeweils vor einem Abfallen desselben erfolgt.

Gemäß der Erfindung ist also ein zentraler Schaltungsteil vorgesehen, der mit den leitungsindividuellen Testrelais im Multiplexbetrieb die einzelnen Teilnehmeranschlußleitungen bedient. Durch die erfindungsgemäß vorgesehene Abfolge der Betätigungen der Testrelais und des elektronischen Schalters, sowie aufgrund dessen Eigenschaften erfolgt die Anschaltung der Zählimpulsquelle knackfrei. Der Koppeltransformator verhindert, daß durch die endliche Sperrdämpfung des elektronischen Schalters im Testbetrieb der Testbus in unzuverlässiger Weise durch den erwähnten gruppeninvividuellen Schaltungsteil beeinflußt wird. Auf der anderen Seite ist durch den erfindungsgemäß vorgesehenen Bandpaß verhindert, daß die auf den Teilnehmeranschlußleitungen übertragenen Sprachsignale durch diese Schaltung in unzuverlässigen Ausmaß bedämpft werden.

Durch die leitungsindividuellen Tiefßaßfilter schließlich ist verhindert, daß die Zählimpulse auf die Teilnehmeranschlußschaltung einwirken können. Die Dämpfung der Sprachsignale durch diese Filterschaltung ist vernachläßigbar. Im Gegensatz zu der bisherigen Lösung muß eine solche Filterschaltung nicht exakt auf die jeweiligen Leitungsverhältnisse abgestimmt sein.

Gemäß einer weiteren Ausgestaltung der Erfindung ist der einen allmählichen Übergang zwischen den Schaltzuständen bewirkende elektronische Schalter unter Verwendung von Feldeffekttransistoren realisiert.

Nachstehend wird die Erfindung anhand eines Ausführungsbeispiels unter Bezugnahme auf eine Figur näher erläutert.

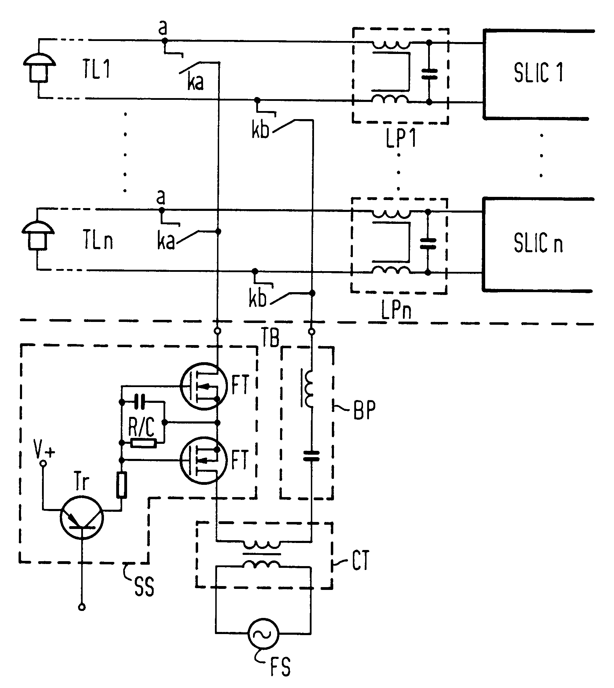

Die Figur zeigt in dem oberhalb der gestrichelten Linie befindlichen Teil Teilnehmeranschlußleitungen TL1 und TLn mit zugehörigen Teilnehmeranschlußschaltungen SliC 1 und SliC n, die zu einer Gruppe von n, vorzugsweise acht Teilnehmeranschlußleitungen bzw. Teilnehmeranschlußschaltungen gehören.

Der Anschluß der Teilnehmeranschlußleitungen an die Teilnehmeranschlußschaltungen erfolgt jeweils über einen Tiefpaß Lp1 bzw. Lpn, der für Signale, deren Frequenz oberhalb des Fernsprechbandes von 300 Hz bis 3400 Hz liegt, eine hohe Dämpfung aufweist.

Die Adern a und b der Teilnehmeranschlußleitungen sind über Kontakte ka und kb von leitungsindividuellen Testrelais mit einem der Gruppe von Teilnehmerleitungen gemeinsamen zweiadrigen Testbus TB verbunden. Die Weiterführung des Testbusses mit Einrichtungen, von denen aus über diese Kontakte Prüfsignale eingespeist bzw. Messungen vorgenommen werden können, sind hier nicht dargestellt.

Unterhalb der wagrechten gestrichelten Linie ist in der Figur der gruppenindividuelle Teil der erfindungsgemäßen Schaltungsanordnung dargestellt.

Dieser Schaltungsteil, der an den Testbus TB angeschlossen ist, umfaßt einen Koppeltransformator CT, an dessen Primärwicklung ein Zählimpulsgenerator FS liegt, der Zählimpulse von z.B. 16 kHz oder 12 kHz erzeugt. Im Sekundärkreis dieses Koppeltransformators, der mit dem Testbus in Verbindung steht, liegt als weiterer Bestandteil dieser gruppenindividuellen Schaltungsanordnung ein Bandpaß BP, der für die vom Impulsgenerator FS abgegebenen Zählimpulse durchlässig ist. Ebenfalls in diesen Sekundärkreis des Koppeltransformators eingefügt ist schließlich als weiterer Bestandteil der erfindungsgemäßen Schaltungsanordnung ein elektronischer Schalter SS zur Erzeugung des Zähltaktes, der sowohl beim Schließen als auch beim Öffnen allmählich in den anderen Schaltzustand übergeht. Dieser elektronische Schalter ist im dargestellten Fall durch zwei Feldeffekttransistoren FT, deren Hauptstromstrecken in Reihe geschaltet sind, deren Steuerelektroden miteinander verbunden sind und über ein RC-Glied RC mit den beiden miteinander verbundenen Hauptelektroden in Verbindung stehen, sowie durch einen Bipolar-Transistor Tr gebildet, über dessen Hauptstromstrecke der Steuerstrom für die Feldeffekttransistoren geliefert wird und dessen Basiselektroden die Steuerimpulse für den elektronischen Schalter zugeführt werden.

Die zuletzt beschriebene gruppenindividuelle Schaltungsanordnung ist aufgrund entsprechender Steuerung der Relaiskontakte ka und kb außerhalb eines Testbetriebs, für den diese ursprünglich vorgesehen sind, im Multiplexbetrieb den einzelnen Teilnehmeranschlußschaltungen zugeordnet. Erfindungsgemäß ist hierbei die Schalterbetätigung derart, daß zunächst die Anschaltung an eine bestimmte Teilnehmeranschlußschaltung durch Schließen der Kontakte ka, kb erfolgt und dann erst der elektronische Schalter SS geschlossen und anschließend wieder geöffnet wird, um die vom Zählimpulsgenerator gelieferten Zählimpulse auf die entsprechende Teilnehmeranschlußleitung TL einzukoppeln, und daß das Abtrennen des Zählimpulsgenerators von der Teilnehmeranschlußleitung durch Öffnen der Kontakte ka und kb erst erfolgt, wenn der elektronische Schalter wieder geöffnet ist. Danach wiederholt sich derselbe Ablauf im Zusammenhang mit einer nachfolgenden an einer Verbindung beteiligten Teilnehmeranschlußleitung. Die Steuerung dieser ganzen Schalterbetätigungen kann ein hier nicht dargestellter Gruppenprozessor übernehmen, der in erster Linie für die Steuerung der Teilnehmeranschlußschaltungen und eines Gruppenkopplers die Verarbeitung empfangener Wählinformationen, die Durchführung von Routineprüfungen und Überwachungsfunktionen verantwortlich ist.

Die Steuerung kann auch derart erfolgen, daß dann wenn nur eine der Teilnehmeranschlußleitungen der Gruppe an einer Verbindung beteiligt ist, die Kontakte ka und kb zwischen den Betätigungen des elektronischen Schalters geschlossen bleiben.

Der erfindungsgemäß vorgesehene Bandpaß verhindert eine Bedämpfung der Sprachsignale auf den Teilnehmeranschlußleitungen durch die gruppenindividuelle Schaltung. Er verhindert außerdem, daß vom Zählimpulsgenerator FS ggf. ausgehende Störfrequenzen an die Teilnehmeranschlußleitungen gelangen.

Wegen des Schaltverhaltens des mit Hilfe der Feldeffekttran sistoren FT realisierten elektronischen Schalters erfolgt das Einkoppeln der Zählimpulse auf die Teilnehmeranschlußleitungen knackfrei.

Die Tiefpässe LP1 bis LPn verhindern, wie angedeutet, daß die Zählimpulse sich auf die Teilnehmeranschlußschaltungen SLIC 1 bis SLIC n auswirken. Sie verhindern ferner, daß durch induktive Kopplungen bei der Zählimpulseinkopplung nicht betroffene Teilnehmeranschlußleitungen beeinträchtigt werden.

## Patentansprüche

1. Schaltungsanordnung zum Einspeisen von Zählimpulsen für die Gebührenzählung beim Teilnehmer auf die an zu einer Baugruppe zusammengefaßten Teilnehmeranschlußschaltungen (SLIC 1 bis SLIC n) angeschlossenen Teilnehmeranschlußleitungen (TL1 bis TLn) eines digitalen Zeitmultiplex-Fernsprechvermittlungssystems, die durch leitungsindividuelle Testrelais (Ka, Kb) mit einer gruppenindividuellen Testbusleitung (TB) zur Durchführung von Leitungsprüfungen verbindbar sind, **dadurch gekennzeichnet, daß** sie als leitungsindividuelle Bestandteile lediglich die Teilnehmeranschlußleitungen (TL1 bis TLn) mit der zugehörigen Teilnehmeranschlußschaltung (SLIC 1 bis SLIC n) verbindende im Fernsprechsprach-Frequenzbereich durchlässige Tiefpaßschaltungen (LP1 bis LPn) und als gruppenindividuellen Bestandteil eine Einspeiseschaltung aufweist, die an den Testbus (TB) angeschlossen ist und einen Koppeltransformator (CT), an dessen Primärwicklung ein Zählimpulsgenerator (FS) angeschlossen ist, ferner einen im mit dem Testbus in Verbindung stehenden Sekundärkreis des Koppeltransformators liegenden und für die Zählimpulsfrequenz durchlässigen Bandpaß (BP), sowie einen ebenfalls im Sekundärkreis des Koppeltransformators liegenden elektronischen Schalter (SS) zur Erzeugung des Zähltaktes aufweist, der sowohl beim Schließen als auch beim Öffnen allmählich in den anderen Schaltzustand übergeht, und ferner dadurch gekennzeichnet, daß die den Teilnehmerleitungen zugeordneten Testrelais (ka, kb) zur Einspeisung der Gebührenimpulse herangezogen und dabei nacheinander betätigt werden, und daß ein Schließen des elektronischen Schalters (SS) jeweils nach dem Anziehen eines Testrelais und ein Öffnen jeweils vor einem Abfallen desselben erfolgt.

2. Schaltungsanordnung nach Anspruch 1, **dadurch gekennzeichnet,** daß der genannte elektronische Schalter (SS) aus zwei Feldeffekttransistoren (FT), deren Hauptstromstrecken in Reihe geschaltet im Sekundärkreis des Koppeltransformators (FS) liegen und deren Steuerelektroden miteinander verbunden sind und über ein RC-Glied (R/C) mit den beiden miteinander verbundenen Hauptelektroden in Verbindung stehen, sowie aus einem Bipolartransistor (Tr) besteht, über dessen Hauptstromstrecke der Steuerstrom für die Feldeffekttransistoren geliefert wird, und dessen Basiselektrode die den elektronischen Schalter steuernden Steuerimpulse zugeführt werden.

3. Schaltungsanordnung nach Anspruch 2, **dadurch gekennzeichnet,** daß die Feldeffekttransistoren (FT) MOS-Feldeffekttransistoren vom Anreicherungstyp sind, bei denen jeweils das Substrat mit einer Hauptelektrode verbunden ist.

## Claims

1. Circuit arrangement for injecting meter pulses for charge metering at the subscriber onto the subscriber lines (TL1 to TLn), connected to subscriber line interface circuits (SLIC 1 to SLIC n) combined to form one assembly, of a digital time-division multiplex telephone switching system, which can be connected by line-individual test relays (ka, kb) to a group-individual test bus line (TB) for carrying out line tests, characterised in that it exhibits as line-individual components only low-pass circuits (LP1 to LPn) transparent in the telephone voice frequency range which connect the subscriber lines (TL1 to TLn) to the associated subscriber line interface circuit (SLIC 1 to SLIC n), and as group-individual component an injection circuit which is connected to the test bus (TB) and a coupling transformer (CT) to the primary winding of which a meter pulse generator (FS) is connected, furthermore exhibits a band-pass filter (BP) which is located in the secondary circuit of the coupling transformer which is connected to the test bus and which is transparent to the meter pulse frequency, and an electronic switch (SS) for generating the meter clock which is also located in the secondary circuit of the coupling transformer, which switch gradually changes to the other switching state during the closing and during the opening, and furthermore characterised in that the test relays (ka, kb) allocated to the subscriber lines are used for injecting the meter pulses and during this process are successively actuated, and in that the electronic switch (SS) is in each case closed after a test relay picks up and is opened in each case before the latter drops out.

2. Circuit arrangement according to Claim 1, characterised in that the said electronic switch (SS) consists of two field-effect transistors (FT), the main current paths of which are located series-connected in the secondary circuit of the coupling transformer (FS) and the gate electrodes of which are connected to one another and are connected via an RC section (R/C) to the two main electrodes connected to one another, and of a bipolar transistor (Tr) via the main current path of which the control current for the field-effect transistors is supplied and the base electrode of which is supplied with the control pulses controlling the electronic switch.

3. Circuit arrangement according to Claim 2, characterised in that the field-effect transistors (FT) are enrichment-type MOS field-effect transistors in which the substrate is in each case connected to one main electrode.

## Revendications

1. Montage pour l'introduction d'impulsions de taxation chez l'abonné, dans les lignes d'abonnés (TL1 à TLn) d'un système numérique de commutation téléphonique à multiplexage temporel, qui sont raccordées à des circuits de raccordement d'abonnés (SLIC 1 à SLIC n), réunis en un module, et qui peuvent être raccordées par des relais de test (Ka,Kb), prévus individuellement pour chaque ligne, à une ligne formant bus de test (TB) prévue individuellement pour chaque groupe et permettant d'exécuter des contrôles de lignes,

caractérisé par le fait qu'il comporte, comme composants prévus individuellement pour les lignes, uniquement des circuits formant filtre passe-bas (LP1 à LPn) qui relient les lignes d'abonnés (TL1 à TLn) aux circuits associés de raccordement d'abonnés (SLIC 1 à SLIC n), et en tant que composant prévu individuellement pour chaque groupe, un circuit d'introduction qui est raccordé au bus de test (TB), et comporte un transformateur de couplage (CT), à l'enroulement primaire duquel est raccordé un générateur d'impulsions de comptage (FS), et en outre, un filtre passe-bande (BP), qui est situé dans le circuit secondaire, raccordé au bus de test, du transformateur de couplage et transmet la fréquence impulsionnelle de comptage, ainsi qu'un interrupteur électronique (SS) également situé dans le circuit secondaire du transformateur de couplage et servant à produire la cadence de comptage et qui passe progressivement dans l'autre état de commutation aussi bien lors de la fermeture que lors de l'ouverture, et en outre, est caractérisé par le fait que les relais de test (ka,kb), associés aux lignes d'abonnés, sont utilisés pour l'introduction des impulsions de taxation et sont actionnés successivement, et qu'une fermeture de l'interrupteur électronique (SS) est réalisée respectivement après l'attraction d'un relais de test et qu'une ouverture est réalisée respectivement avant la retombée de ce relais.

2. Montage suivant la revendication 1, caractérise par le fait que ledit interrupteur électronique (SS) est formé de transistors à effet de champ (FT), dont les sections principales de courant sont branchées en série dans le circuit secondaire du transformateur de couplage (FS) et dont les électrodes de commande sont raccordées entre elles et, par l'intermédiaire d'un circuit RC (R/C), aux deux électrodes principales reliées entre elles, ainsi que par un transistor bipolaire (Tr), par l'intermédiaire de la section principale de courant duquel est délivré le courant de commande destiné aux transistors à effet de champ et à l'électrode de base duquel sont envoyées les impulsions de commande, qui commandent l'interrupteur électronique.

3. Montage suivant la revendication 2, caractérisé par le fait que les transistors à effet de champ (FT) sont des transistors à effet de champ MOS du type à enrichissement, dans lesquels le substrat est raccordé à une électrode principale.